# EUROPÄISCHE PATENTANMELDUNG

(11) **EP 3 872 355 A1**
(43) Veröffentlichungstag der Anmeldung: **01.09.2021**
(21) Anmeldenummer: 21000055.0
(22) Anmeldetag: 23.02.2021
(51) Int. Cl.: F15B 11/10, B60G 17/056

(54) **ELEKTROHYDRAULISCHE VERSORGUNGSEINRICHTUNG FÜR EINE DAMIT VERBUNDENE ELEKTROHYDRAULISCHE RADAUFHÄNGUNGSVORRICHTUNG**

(30) Priorität: 28.02.2020 DE 102020105270
(71) Anmelder: Thomas Magnete GmbH, 57562 Herdorf (DE)
(72) Erfinder: Ginsberg, Benjamin, 56479 Liebenscheid (DE); Kuhl, Mario, 04929 Dobra (DE); Quast, Stefan, 57548 Kirchen (DE); Sauer, Daniel, 57072 Siegen (DE); Schulz, René, 57299 Burbach (DE)

(57) **Zusammenfassung**

Die Erfindung betrifft eine elektrohydraulische Versorgungseinrichtung (1), aufweisend ein Motorpumpenaggregat (3), aufweisend einen Elektromotor (4) und einen Verdränger (5), einen Vorratstank (15) und ein entsperrbares Rückschlagventil (6), das durch einen Druck in einer Verbraucherleitung L_{V} sowie durch eine Feder (14) schließbar ist, wobei das entsperrbare Rückschlagventil (6) durch einen Druck in einer Pumpenleitung L_{P}, die mit dem Motorpumpenaggregat (3) verbunden ist, und durch ein Kraftmittel (22), das mittels eines Stößels (7) auf einen Dichtkörper (20) des Rückschlagventils (6) einwirkt, entsperrbar ist.

Erfindungsgemäß ist vorgesehen, dass das Rückschlagventil (6) durch das Kraftmittel (22) in den Betriebszuständen entsperrbar ist, in denen der Druck in der Pumpenleitung L_{P} einen Grenzdruck überschreitet, der sich aus dem Druck in der Verbraucherleitung L_{V} vermindert um einen vorgegebenen Grenzwert Δp_{g} ergibt, und dass durch das elektrisch umsteuerbare Motorpumpenaggregat (3) bei geöffnetem Rückschlagventil (6) wahlweise dem Verbraucher (31) zusätzliches Fluid unter Druck zuführbar ist oder bei einer Umkehr der Drehrichtung des Motorpumpenaggregats (3) von dem Verbraucher (31) gesteuert Fluid unter Aufrechterhaltung des Drucks im Verbraucher (31) zu dem Vorratstank (15) ableitbar ist.

## Beschreibung

Die Erfindung betrifft eine elektrohydraulische Versorgungseinrichtung, aufweisend ein Motorpumpenaggregat, das selbst einen Elektromotor und einen fluidischen Verdränger aufweist, einen Vorratstank und ein entsperrbares Rückschlagventil, das durch einen Druck in einer Verbraucherleitung Lv sowie durch eine Feder schließbar ist, wobei das entsperrbare Rückschlagventil durch einen Druck in einer Pumpenleitung Lp, die mit dem Motorpumpenaggregat verbunden ist, und durch ein Kraftmittel, das mittels eines Stößels auf einen Dichtkörper des Rückschlagventils einwirkt, geöffnet werden kann.
Naheliegende Ausführungen einer Versorgungseinrichtung mit einer Mehrzahl von Ventilen zum Zuführen und Ableiten von Fluid sind mit einem hohen Aufwand verbunden und erzielen eine unzureichende Steuerbarkeit des Ableitens, wenn dies durch ein geschaltetes Wegeventil erfolgt.

Es ist Aufgabe der vorliegenden Erfindung, den Aufwand insbesondere hinsichtlich der verwendeten Ventilmittel zu vermindern und die Steuerbarkeit des Ableitens von unter Druck stehendem Fluid zu verbessern, sowie das Ventilmittel vor Verschleiß durch Fluidströmungen mit hoher Geschwindigkeit zu schützen.

Die Lösung dieser Aufgabe erfolgt vorrichtungsgemäß durch die Merkmale des ersten Anspruchs und verfahrensgemäß durch den letzten Anspruch in Verbindung mit mindestens einem Vorrichtungsanspruch.

Die Erfindung schließt die technische Lehre ein, die Kraft des das Rückschlagventil öffnenden Kraftmittels auslegungsgemäß derart zu begrenzen, dass das Kraftmittel das Rückschlagventil nur öffnen kann, wenn der Druck in der Pumpenleitung L_{P} den Druck in der Verbraucherleitung Lv um nicht mehr als einen vorgegebenen Grenzwert Δp_{g} unterschreitet.
Die Begrenzung der Druckdifferenz über dem entsperrbaren Rückschlagventil auf den Grenzwert Δp_{g} mindert den strömungsbedingten Verschleiß an dem Rückschlagventil und ermöglicht den Einsatz einer Weichdichtung zur Verbesserung der Dichtwirkung des Rückschlagventils. Erfahrungsgemäß ist ein Grenzwert von Δp_{g} = 5 bar oder weniger auch bei dem Einsatz einer Weichdichtung als betriebssicher zu betrachten. Die auslegungsgemäße Begrenzung der Kraft des Kraftmittels erfolgt bei der Verwendung eines Elektromagneten durch die Wahl der Windungszahl und der elektrischen Stromstärke und bei einem Einsatz eines fluidischen Zylinders durch die Wahl des Zylinderdurchmessers.
Das Motorpumpenaggregat ist elektrisch umsteuerbar und kann bei geöffnetem Rückschlagventil wahlweise dem Verbraucher zusätzliches Fluid zuführen oder bei einer Umkehr seiner Drehrichtung von dem Verbraucher in genau gesteuerter Weise unter Druck stehendes Fluid ableiten.
Die Nutzung des Motorpumpenaggregats sowohl zur Zuführung von Fluid zum Verbraucher als auch zum gesteuerten Ableiten von Fluid von dem Verbraucher zum Vorratstank ermöglicht den Einsatz eines sehr einfach gestalteten Rückschlagventils und bewirkt eine erheblich verbesserte Steuerbarkeit des Ableitens im Vergleich zu einem Ableiten durch ein Wegeventil oder eine geschaltete Drossel. Wenn bei dem Ableiten des Fluids der Druck des Verbrauchers erhalten bleibt, wirkt beim Ableiten des Fluids der Verdränger des Motorpumpenaggregats als fluidischer Motor und der Elektromotor wirkt als Generator.
Der Elektromotor und seine Steuerung sind so beschaffen, dass sich auch in der Betriebsart als Generator die Drehzahl des Elektromotors steuern lässt, dazu ist der Elektromotor vorzugsweise als permanentmagneterregter bürstenloser Synchronmotor aufgebaut.

Die abhängigen Vorrichtungsansprüche 1 bis 9 beinhalten vorteilhafte Weiterbildungen der Erfindung, der Verfahrensanspruch 10 ist von Vorrichtungsansprüchen abhängig.

Nach einer vorteilhaften Weiterbildung ist in einer ersten Ausführung das Kraftmittel als ein Elektromagnet ausgeführt, dessen Kraft durch die Windungszahl des Elektromagneten und eine von einer elektrischen Steuerung vorgegebene elektrische Spannung und den elektrischen Widerstand des Elektromagneten oder durch einen von der elektrischen Steuerung vorgegebenen elektrischen Strom begrenzt ist. Diese Ausführung ist wegen der geringen Zahl von Bauteilen besonders kostengünstig, erfordert allerdings wegen der erforderlichen Kraft einen leistungsstärkeren

Elektromagneten als ein Schaltventil und eine geeignete elektrische Steuerung, vorzugsweise mit geregeltem Stromausgang.

Vorteilhafterweise ist dabei der Stößel von einer Stangendichtung umgeben, die im Zusammenwirken mit der Leckageleitung L_{L} den Druck der Pumpenleitung L_{P} von dem Elektromagneten fernhält. Dies erlaubt die Verwendung eines Elektromagneten mit niedriger Druckspezifikation für den Ankerraum.

In einer zweiten Ausführung ist das Kraftmittel als ein Zylinder ausgeführt, der über eine Steuerleitung L_{S} und ein Schaltventil mit dem Druck der Pumpenleitung L_{P} des Motorpumpenaggegats beaufschlagbar ist und dessen Kraft durch den Wirkdurchmesser des Zylinders und einen steuerbaren Ausgangsdruck des Motorpumpenaggregats in der Pumpenleitung L_{P} begrenzt ist, wobei der Druck in der Pumpenleitung L_{P} über das Drehmoment des Elektromotors steuerbar ist und dieses Drehmoment von der elektrischen Steuerung des in dem Motorpumpenaggregats enthaltenen Elektromotors steuerbar ist.

Dabei ist die Beaufschlagung des Zylinders zusätzlich durch ein elektrohydraulisches Schaltventil steuerbar, das im Ruhezustand den Zylinder über die Leckageleitung L_{L} mit dem Vorratstank verbindet und im Arbeitszustand den Zylinder über die Steuerleitung L_{S} und die Pumpenleitung L_{P} mit dem Auslass des Motorpumpenaggregats verbindet.

Bei dieser Ausführung wird die Kraft zum Öffnen des Rückschlagventils fluidisch erzeugt, dadurch können die erforderlichen Kräfte kostengünstig erzeugt werden. Der Zylinder muss allerdings bei dieser Ausführung durch ein zusätzliches elektrohydraulisches Schaltventil angesteuert werden.

Auch bei dieser Ausführung ist der Stößel vorteilhafterweise von einer Stangendichtung umgeben, die im Zusammenwirken mit der Leckageleitung L_{L} den Druck der Pumpenleitung Lp von dem Zylinder fernhält.

In einer vorteilhaften dritten Ausführung der Versorgungseinrichtung ist das Kraftmittel ebenfalls als ein Zylinder ausgeführt, der über die Pumpenleitung L_{P} mit dem Ausgangsdruck des Motorpumpenaggegats beaufschlagt ist und dessen Kraft durch den Wirkdurchmesser des Zylinders und den Ausgangsdruck des Motorpumpenaggregats in der Pumpenleitung L_{P} begrenzbar ist. Ein Schaltventil zwischen dem Motorpumpenaggregat und dem Zylinder ist bei dieser Ausführung nicht vorgesehen.

Die Förderleistung des Motorpumpenaggregats ist dabei durch eine elektrische Steuerung des Elektromotors in dem Motorpumpenaggregat steuerbar. Der Druck in der Verbraucherleitung L_{V} und folglich der Druck in der Pumpenleitung Lp sind bei einer Ableitung von Fluid von dem Verbraucher zu dem Motorpumpenaggregat durch eine Drossel oder eine Blende und / oder ein steuerbares fluidisches Schließmittel herabsetzbar. Dabei ist das Schließmittel vorteilhafterweise ein elektrohydraulisches Ventil, das Teil einer verbraucherseitigen elektrohydraulischen Steuerung ist, die von der elektrischen Steuerung angesteuert wird.

Solange der Druck in der Verbraucherleitung von dem angeschlossenen Verbraucher auf dessen Druck gehalten wird, bleibt das Rückschlagventil offen, weil die Kraft des Zylinders überwiegt. Wenn aber wegen der Wirkung des Schließmittels oder der Drossel der Druck in der Verbraucherleitung stark absinkt, sinkt bei einer fluidischen Motorwirkung des Verdrängers in dem Motorpumpenaggregat auch der Druck in der Pumpenleitung ab und das Rückschlagventil schließt durch die Wirkung der Ventilfeder. Ein ausreichend starkes Absinken des Drucks liegt vor, wenn die Ventilfeder das Rückschlagventil gegen die Druckkraft schließen kann.

Vorteilhafterweise enthält das Motorpumpenaggregat einen drehzahlvariablen und hinsichtlich seiner Drehrichtung umsteuerbaren Elektromotor, der beispielsweise als bürstenloser Synchronmotor ausgeführt ist, und der von einer elektrischen Steuerung mehrphasig mit elektrischem Strom versorgt wird.

Weiter vorteilhafterweise ist der Elektromotor durch die elektrische Steuerung auch hinsichtlich seines Drehmoments überwachbar und steuerbar. Damit ist auch der Druck des Fluids am Auslass des Motorpumpenaggregats beeinflussbar, wobei es allerdings Betriebszustände bei offenem Rückschlagventil gibt, in denen der Druck des Fluids am Auslass des Motorpumpenaggregats von dem Verbraucher vorgegeben wird.

Vorzugsweise enthält das entsperrbare Rückschlagventil mindestens einen Dichtkörper, einen Ventilsitz und eine Feder, wobei der Dichtkörper vorteilhafterweise eine Weichdichtung aufweist, die entweder im Dichtkörper teilweise gekammert ist und gegen den Ventilsitz abdichtet, oder die im Ventilsitz gekammert ist und gegen den Dichtkörper abdichtet. Dabei wird eine in eine Kammer eingebaute Dichtung als gekammerte Dichtung bezeichnet. Alternativ können auch der Dichtkörper und / oder der Ventilsitz mit einem Material beschichtet sein, das erheblich weicher ist als die Materialien des Dichtkörpers oder des Dichtsitzes, beispielsweise mit einem Elastomer oder einem Kunststoff. Damit lässt sich bekanntermaßen die Dichtwirkung verbessern.

Mit dem Einsatz der Weichdichtung, vorzugsweise aus einem verschleißfesten Material wie beispielsweise Polyurethan, lässt sich erfahrungsgemäß eine ausreichende Dichtigkeit des Rückschlagventils auch über einen Zeitraum von mehreren Wochen erreichen.

Die erfindungsgemäße elektrohydraulische Versorgungseinheit ist vorteilhafterweise mit einer elektrohydraulischen Radaufhängungsvorrichtung fluidisch und elektrisch wirkverbunden und versorgt diese über die Verbraucherleitung Lv mit Fluid. Weiter vorteilhafterweise werden die elektrohydraulische Radaufhängungsvorrichtung und die elektrohydraulische Versorgungseinrichtung durch eine gemeinsame elektrische Steuerung gesteuert. Bei der dritten Ausführung der Versorgungseinrichtung enthält die Radaufhängungsvorrichtung vorteilhafterweise als Schließmittel ein elektrohydraulisches Ventil, das die fluidische Verbindung zur elektrohydraulischen Versorgungseinheit mindestens erheblich reduzieren kann. Alternativ kann eine Drossel die fluidische Verbindung so weit begrenzen, dass bei einer schnellen Ableitung von Fluid aus der Radaufhängungsvorrichtung der Druck in der Verbraucherleitung Lv erheblich abfällt, wobei das Rückschlagventil der Versorgungseinrichtung schließt. Daher kommt die dritte Ausführung der Versorgungseinrichtung ohne ein elektrohydraulisches Schaltventil aus.

Im Betrieb der erfindungsgemäßen elektrohydraulischen Versorgungseinrichtung wird nach einem Stillstand durch die elektrische Steuerung das Motorpumpenaggregat auf eine ausreichend große Drehzahl und einen ausreichend hohen Druck in der Pumpenleitung Lp gebracht, so dass die Druckdifferenz zwischen dem Druck in der Verbraucherleitung L_{V} und dem Druck in der Pumpenleitung L_{P} einen vorgegebenen Grenzwert Δp_{g} unterschreitet, wobei erst nach der Unterschreitung des Grenzwerts Δp_{g} für die Druckdifferenz der Elektromagnet (bei der ersten Ausführung) oder das elektromagnetische Schaltventil (bei der zweiten Ausführung) von der elektrischen Steuerung mit elektrischem Strom versorgt wird. Bei der dritten Ausführung ist kein Schalten eines Elektromagneten oder eines Schaltventils erforderlich, stattdessen wird ein Schließmittel in der elektrohydraulischen Steuerung der Radaufhängungsvorrichtung geschlossen oder es wird über einer Drossel in der Verbraucherleitung durch ein schnelles Ableiten von Fluid eine so große Druckdifferenz erzeugt, dass die Drücke in der Verbraucherleitung und in der Pumpenleitung zusammenbrechen, mit der Folge, dass das Rückschlagventil schließt.

Weitere Einzelheiten, Merkmale und Vorteile der Erfindung ergeben sich aus nachfolgender Beschreibung anhand der Zeichnung.

Es zeigen:
- Figur 1: eine erfindungsgemäße Versorgungseinrichtung der ersten Ausführung mit einer direkten Ansteuerung des Sitzventils durch einen Elektromagneten
- Figur 2: eine erfindungsgemäße Versorgungseinrichtung der zweiten Ausführung mit einer hydraulischen Ansteuerung des Sitzventils mit elektrohydraulischer Vorsteuerung
- Figur 3: eine erfindungsgemäße Versorgungseinrichtung der dritten Ausführung mit einer hydraulischen Ansteuerung des Sitzventils ohne elektrohydraulische Vorsteuerung
- Figur 4: ein erfindungsgemäßes entsperrbares Rückschlagventil mit Weichdichtung

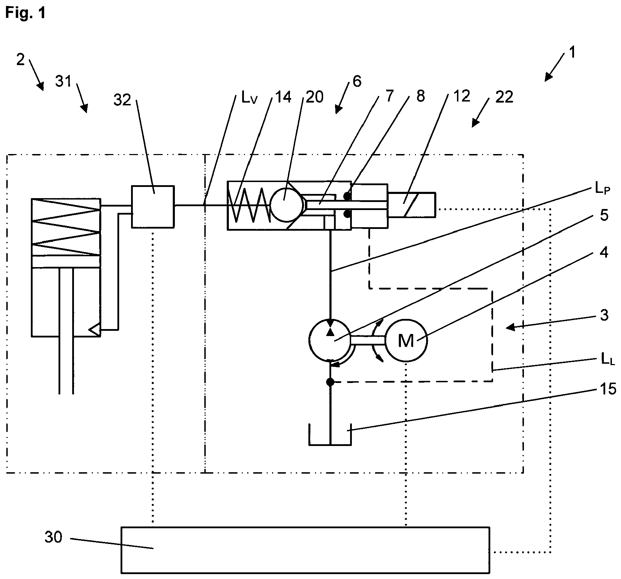

Figur 1 zeigt eine elektrohydraulische Radaufhängungsvorrichtung 2 und eine damit verbundene erfindungsgemäße elektrohydraulische Versorgungseinrichtung 1, wobei die Versorgungseinrichtung 1 ein Motorpumpenaggregat 3, bestehend aus einem Elektromotor 4 und einem Verdränger 5, einen Vorratstank 15 und ein entsperrbares Rückschlagventil 6 aufweist.
Das Rückschlagventil 6 ist durch einen Druck in einer Verbraucherleitung Lvzu der Radaufhängungsvorrichtung 2 sowie durch eine Feder 14 schließbar und kann durch einen Druck in einer Pumpenleitung L_{P}, die mit dem Motorpumpenaggregat 3 verbunden ist, und durch einen Elektromagneten 12, der mittels eines Stößels 7 auf einen Dichtkörper 20 des Rückschlagventils 6 einwirkt, geöffnet werden.
Die Kraft des Elektromagneten 12 ist auslegungsgemäß derart begrenzt, dass der Elektromagnet 12 das Rückschlagventil 6 nur öffnen kann, wenn der Druck in der Pumpenleitung L_{P} den Druck in der Verbraucherleitung L_{V} zur Radaufhängungsvorrichtung 2 um nicht mehr als einen vorgegebenen Grenzwert Δp_{g} unterschreitet.
Das elektrisch umsteuerbare Motorpumpenaggregat 3 kann bei geöffnetem Rückschlagventil 6 wahlweise der Radaufhängungsvorrichtung 2 zusätzliches Fluid unter Druck zuführen oder bei einer Umkehr seiner Drehrichtung von der Radaufhängungsvorrichtung gesteuert Fluid unter Aufrechterhaltung des Drucks in Lv zu dem Vorratstank 15 ableiten.

Die Kraft des Elektromagneten 12 ist durch eine von einer elektrischen Steuerung 30 vorgegebene elektrische Spannung und den elektrischen Widerstand des Elektromagneten 12 oder durch einen von der elektrischen Steuerung 30 vorgegebenen elektrischen Strom begrenzt.

Der Stößel 7 ist von einer Stangendichtung 8 umgeben, die im Zusammenwirken mit der Leckageleitung L_{L} den Druck der Pumpenleitung L_{P} von dem Elektromagneten fernhält.

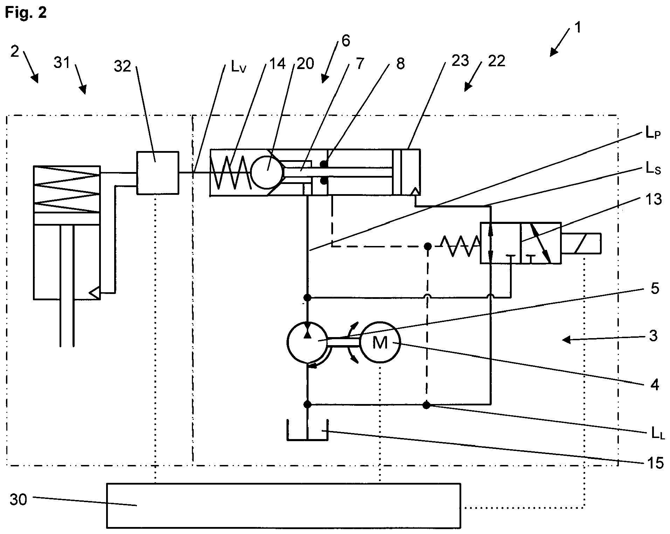

Figur 2 zeigt eine zweite Ausführung der Versorgungseinrichtung 2, bei der ein Zylinder 23 den Stößel 7 betätigt. Der Zylinder 23 ist über eine Steuerleitung L_{S} und ein Schaltventil 13 mit dem Ausgangsdruck des Motorpumpenaggegats 3 beaufschlagbar, und seine Kraft ist durch einen vorgebbaren Ausgangsdruck des Motorpumpenaggregats 3 in der Pumpenleitung L_{P} begrenzt. Dabei ist der Druck in der Pumpenleitung L_{P} durch eine elektrische Steuerung 30 des Elektromotors 4 in dem Motorpumpenaggregat 3 steuerbar.

Die Beaufschlagung des Zylinders 23 mit Druck ist durch ein elektrohydraulisches Schaltventil 13 steuerbar, das im Ruhezustand den Zylinder 23 mit dem Vorratstank 15 verbindet und im Arbeitszustand den Zylinder 23 über die Steuerleitung Ls und die Pumpenleitung L_{P} mit dem Auslass des Verdrängers 5 in dem Motorpumpenaggregats 3 verbindet.

Der Stößel 7 ist von einer Stangendichtung 8 umgeben, die im Zusammenwirken mit der Leckageleitung L_{L} den Druck der Pumpenleitung P_{P} von dem Zylinder 23 fernhält.

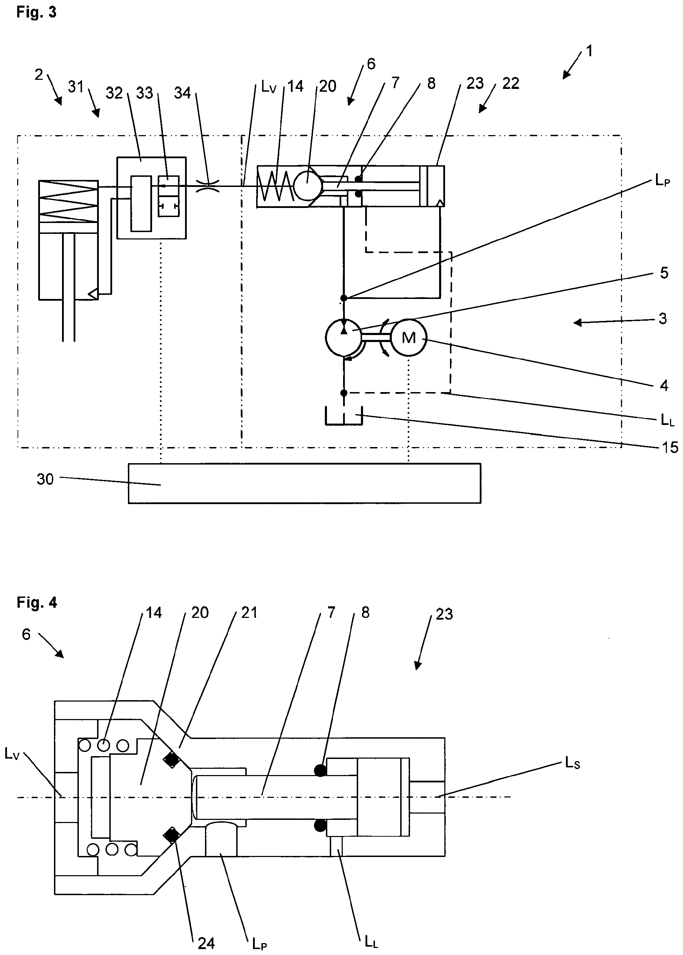

Figur 3 zeigt eine dritte Ausführung der Versorgungseinrichtung 2, bei der ebenfalls ein Zylinder 23 den Stößel 7 betätigt. Der Zylinder 23 ist über die Pumpenleitung L_{P} mit dem Ausgangsdruck des Motorpumpenaggegats 3 beaufschlagt, und seine Kraft ist durch einen vorgebbaren Ausgangsdruck des Motorpumpenaggregats 3 in der Pumpenleitung L_{P} begrenzt. Bei einer Ableitung von Fluid von dem Verbraucher 31 zu dem Motorpumpenaggregat 3 ist der Druck in der Verbraucherleitung L_{V} und folglich in der Pumpenleitung L_{P} durch eine Drossel 34 und / oder ein fluidisches Schließmittel 33 herabsetzbar.

Das Motorpumpenaggregat 3 enthält einen drehzahlvariablen und hinsichtlich seiner Drehrichtung umsteuerbaren Elektromotor 4, der von einer elektrischen Steuerung 30 mit elektrischem Strom versorgt wird. Dabei ist der Elektromotor 4 durch die elektrische Steuerung 30 hinsichtlich seines Drehmoments überwachbar und steuerbar. Der Elektromotor ist mit einem fluidischen Verdränger 5 gekuppelt, der in einer ersten Drehrichtung (vorwärts) als Pumpe und in einer zweiten Drehrichtung (rückwärts) als fluidischer Motor arbeiten kann. Die beiden verbleibenden Betriebsarten (vorwärts / Motorbetrieb) und (rückwärts / Pumpenbetrieb) werden für den Verdränger nicht genutzt. Dementsprechend ist auch der Elektromotor 4 in zwei Betriebsarten betreibbar, vorwärts antreibend und rückwärts bremsend.

Figur 4 zeigt eine vorteilhafte Ausführung des entsperrbaren Rückschlagventils 6, das mindestens einen Dichtkörper 20, einen Ventilsitz 21, und eine Feder 14 enthält.

Dabei wirkt der Dichtkörper 20 mit einer Weichdichtung 24 zusammen, die im Dichtkörper 20 teilweise gekammert ist und gegen den Ventilsitz 21 abdichtet.

Figur 1, 2 und 3 zeigen die elektrohydraulische Radaufhängungsvorrichtung 2 und die elektrohydraulische Versorgungseinrichtung 1, die über die Verbraucherleitung Lv fluidisch verbunden sind. Dabei werden vorteilhafterweise die elektrohydraulische Radaufhängungsvorrichtung 2 und die elektrohydraulischen Versorgungseinrichtung 1 durch eine gemeinsame elektrische Steuerung 30 gesteuert.

Die vorhergehende Beschreibung gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

### Bezugszeichenliste

- 1: Versorgungseinrichtung
- 2: Radaufhängungsvorrichtung
- 3: Motorpumpenaggregat
- 4: Elektromotor
- 5: Verdränger
- 6: Entsperrbares Rückschlagventil
- 7: Stößel
- 8: Stangendichtung
- 12: Elektromagnet
- 13: Schaltventil
- 14: Feder
- 15: Versorgungstank
- 20: Dichtkörper
- 21: Ventilsitz
- 22: Kraftmittel
- 23: Zylinder
- 24: Weichdichtung
- 30: Elektrische Steuerung
- 31: Verbraucher
- 32: elektrohydraulische Steuereinheit
- 33: Schließmittel
- 34: Drossel
- L_{V}: Verbraucherleitung
- L_{P}: Pumpenleitung
- L_{L}: Leckageleitung
- L_{S}: Steuerleitung

## Patentansprüche

1. Elektrohydraulische Versorgungseinrichtung (1), aufweisend ein Motorpumpenaggregat (3), das einen Elektromotor (4) und einen fluidischen Verdränger (5) aufweist, einen Vorratstank (15) und ein entsperrbares Rückschlagventil (6), das durch einen Druck in einer Verbraucherleitung Lv sowie durch eine Feder (14) sperrbar ist, wobei das entsperrbare Rückschlagventil (6) durch einen Druck in einer Pumpenleitung L_{P}, die mit dem Motorpumpenaggregat (3) verbunden ist, und durch ein Kraftmittel (22), das mittels eines Stößels (7) auf einen Dichtkörper (20) des Rückschlagventils (6) einwirkt, entsperrbar ist,
**dadurch gekennzeichnet, dass**
die Kraft des Kraftmittels (22) auslegungsgemäß derart begrenzt ist, dass das Rückschlagventil (6) durch das Kraftmittel (22) in den Betriebszuständen entsperrbar ist, in denen der Druck in der Pumpenleitung L_{P} einen Grenzdruck überschreitet, der sich aus dem Druck in der Verbraucherleitung Lv vermindert um einen vorgegebenen Grenzwert Δp_{g} ergibt, und dass durch das elektrisch umsteuerbare Motorpumpenaggregat (3) bei geöffnetem Rückschlagventil (6) wahlweise dem Verbraucher (31) zusätzliches Fluid unter Druck zuführbar ist oder bei einer Umkehr der Drehrichtung des Motorpumpenaggregats (3) von dem Verbraucher (31) gesteuert Fluid unter Aufrechterhaltung des Drucks im Verbraucher (31) zu dem Vorratstank (15) ableitbar ist.

2. Elektrohydraulische Versorgungseinrichtung (1) nach Anspruch 1, **dadurch gekennzeichnet, dass** das Kraftmittel (22) als ein Elektromagnet (12) ausgeführt ist, dessen Kraft durch die Windungszahl des Elektromagneten (12) und eine von einer elektrischen Steuerung (30) vorgegebene elektrische Spannung und den elektrischen Widerstand des Elektromagneten (12) oder durch einen von der elektrischen Steuerung (30) vorgegebenen elektrischen Strom begrenzt ist.

3. Elektrohydraulische Versorgungseinrichtung (1) nach Anspruch 2, **dadurch gekennzeichnet, dass** der Stößel (7) von einer Stangendichtung (8) umgeben ist, die den Druck der Pumpenleitung Ppvon dem Elektromagneten (12) fernhält.

4. Elektrohydraulische Versorgungseinrichtung (1) nach Anspruch 1, **dadurch gekennzeichnet, dass** das Kraftmittel (22) als ein Zylinder (23) ausgeführt ist, der über eine Steuerleitung L_{S} und ein Schaltventil (13) mit dem Ausgangsdruck des Motorpumpenaggegats (3) beaufschlagbar ist und dessen Kraft durch den Wirkdurchmesser des Zylinders (23) und einen steuerbaren Ausgangsdruck des Motorpumpenaggregats (3) in der Pumpenleitung L_{P} begrenzt ist, wobei der Druck in der Pumpenleitung L_{P} durch eine elektrische Steuerung (30) des Elektromotors (4) in dem Motorpumpenaggregat (3) begrenzbar ist, und wobei die Beaufschlagung des Zylinders (23) durch ein elektrohydraulisches Schaltventil (13) steuerbar ist, das im Ruhezustand den Zylinder (23) mit dem Vorratstank (15) verbunden hält und im Arbeitszustand den Zylinder (23) über die Steuerleitung L_{S} und die Pumpenleitung L_{P} mit dem Auslass des Motorpumpenaggregats (3) verbunden hält.

5. Elektrohydraulische Versorgungseinrichtung (1) nach Anspruch 1, **dadurch gekennzeichnet, dass** das Kraftmittel (22) als ein Zylinder (23) ausgeführt ist, der über die Pumpenleitung L_{P} mit dem Ausgangsdruck des Motorpumpenaggegats (3) beaufschlagbar ist und dessen Kraft durch den Wirkdurchmesser des Zylinders (23) und einen begrenzbaren Ausgangsdruck des Motorpumpenaggregats (3) in der Pumpenleitung L_{P} begrenzt ist, wobei die Förderleistung des Motorpumpenaggregats (3) durch eine elektrische Steuerung (30) des Elektromotors (4) in dem Motorpumpenaggregat (3) steuerbar ist, und wobei der Druck in der Verbraucherleitung L_{V} bei einer Ableitung von Fluid von dem Verbraucher (31) zu dem Motorpumpenaggregat (3) durch eine Drossel (34) oder eine Blende und / oder ein steuerbares fluidisches Schließmittel (33) herabsetzbar ist.

6. Elektrohydraulische Versorgungseinrichtung (1) nach Anspruch 4 oder 5, **dadurch gekennzeichnet, dass** der Stößel (7) von einer Stangendichtung (8) umgeben ist, die den Druck der Pumpenleitung P_{P} von dem Zylinder (23) fernhaltend angeordnet ist.

7. Elektrohydraulische Versorgungseinrichtung (1) nach einem der vorstehenden Ansprüche, **dadurch gekennzeichnet, dass** das Motorpumpenaggregat (3) einen drehzahlvariablen und hinsichtlich seiner Drehrichtung umsteuerbaren Elektromotor (4) enthält, der von einer elektrischen Steuerung (30) mit elektrischem Strom versorgt ist, wobei der Elektromotor (4) durch die elektrische Steuerung (30) hinsichtlich seines Drehmoments überwachbar und steuerbar ist.

8. Elektrohydraulische Versorgungseinrichtung (1) nach einem der vorstehenden Ansprüche, **dadurch gekennzeichnet, dass** das entsperrbare Rückschlagventil (6) mindestens einen Dichtkörper (20), einen Ventilsitz (21), und eine Feder (14) enthält, wobei der Dichtkörper (20) mit einer Weichdichtung (24) zusammenwirkt, die vorzugsweise im Dichtkörper (20) teilweise gekammert ist und gegen den Ventilsitz (21) abdichtend angeordnet ist, oder die im Ventilsitz (21) teilweise gekammert ist und gegen den Dichtkörper (20) abdichtend angeordnet ist.

9. Elektrohydraulische Radaufhängungsvorrichtung (2), mit einer elektrohydraulischen Versorgungseinrichtung (1) nach einem der vorstehenden Ansprüche, **dadurch gekennzeichnet, dass** die elektrohydraulische Radaufhängungsvorrichtung (2) über die Verbraucherleitung Lv fluidisch mit der elektrohydraulischen Versorgungseinrichtung (1) verbunden ist und dass die elektrohydraulische Radaufhängungsvorrichtung (2) und die elektrohydraulischen Versorgungseinrichtung (1) durch eine gemeinsame elektrische Steuerung (30) steuerbar sind.

10. Verfahren zum Betrieb einer elektrohydraulischen Versorgungseinrichtung (1) nach einem der Ansprüche 1 bis 4, **dadurch gekennzeichnet, dass** bei der Inbetriebnahme der Versorgungseinrichtung (1) nach einem Stillstand das Motorpumpenaggregat (3) durch die elektrische Steuerung (30) auf eine ausreichend große Drehzahl und einen ausreichend hohen Druck in der Pumpenleitung Lp gebracht wird, so dass die Druckdifferenz zwischen dem Druck in der Verbraucherleitung L_{V} und dem Druck in der Pumpenleitung L_{P} einen vorgegebenen Grenzwert Δp_{g} unterschreitet, wobei erst nach der Unterschreitung des Grenzwerts Δp_{g} das Kraftmittel (22) das Rückschlagventil (6) öffnen kann, indem der Elektromagnet (12) oder das elektromagnetische Schaltventil (13) von der elektrischen Steuerung (30) mit elektrischem Strom versorgt wird.
